# EUROPÄISCHE PATENTSCHRIFT

(11) **EP 2 673 523 B1**
(45) Veröffentlichungstag und Bekanntmachung des Hinweises auf die Patenterteilung: **24.04.2019**
(21) Anmeldenummer: 11813661.3
(22) Anmeldetag: 13.09.2011
(51) Int. Cl.: F16D 63/00, F16H 35/14, F16H 25/18, F16B 2/14, F16D 125/66, F16D 127/06

(54) **VORRICHTUNG MIT EINER RASTMECHANIK**
DEVICE WITH A LATCHING MECHANISM
APPAREIL COMPORTANT UNE MÉCANIQUE D'ENCLIQUETAGE

(30) Priorität: 13.09.2010 DE 102010045108
(43) Veröffentlichungstag der Anmeldung: 18.12.2013
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang
(86) Internationale Anmeldenummer: PCT/DE2011/001793
(87) Internationale Veröffentlichungsnummer: WO 2012/062260

(56) Entgegenhaltungen:
- EP-A2- 1 394 831
- DE-B3- 10 252 915
- DE-C1- 19 908 904

## Beschreibung

Die Erfindung betrifft eine Vorrichtung in der ein beweglich gelagertes Abtriebselement zwei Endlagen aufweist, wobei zwischen dem Abtriebselement und dessen Antriebsvorrichtung eine Rastmechanik angeordnet ist, über die das Abtriebselement bei einem ersten Antriebsimpuls durch eine Hub- oder Schwenkbewegung gegen eine Rückstellkraft aus der ersten in die zweite Endlage bringbar ist, und über die bei einem zweiten Antriebsimpuls das Abtriebselement aus der zweiten in die erste Endlage durch die Rückstellkraft überführbar ist.

Alle bekannten Brems-, Klemm- und Greifvorrichtungen oder andere Vorrichtungen, im Weiteren Nutzvorrichtungen genannt, die zwischen ihrer Arbeits- und Ruhelage eine diskontinuierliche Bewegung - wie eine alternierende Hub- oder Schwenkbewegung -erfordern, werden in ihren Endlagen durch selbsthemmende Antriebsgetriebe oder durch Antriebsvorrichtungen gehalten. Die Antriebsvorrichtungen, wie z.B. Elektromotoren oder Elektromagnete, halten mindestens eine Endlage durch permanente Energiezufuhr. Bei Antriebsvorrichtungen, wie pneumatische oder hydraulische Zylinder, muss in mindestens einer Endlage mit Ventilen gasdicht der Arbeitsdruck gehalten werden.

Aus der DE 102 52 915 B3 ist ein Reibgehemme mit Notbremsfunktion bekannt, bei dem ein Getriebemotor einen Federspeicher zur späteren Betätigung des Reibgehemmes auflädt, um ihn in dieser Position mittels eines zusätzlichen elektrisch angetriebenen Gesperres zu halten. Nach dem Laden fährt der Getriebemotor seine Spannmittel zurück, so dass bei einem Stromausfall das Gesperre den Federspeicher freigeben kann, um das Reibgehemme in Einsatz zu bringen.

Der vorliegenden Erfindung liegt die Problemstellung zugrunde, eine Vorrichtung zu entwickeln, die z.B. innerhalb einer Brems-, Klemm- oder Greifvorrichtung zwei stabile Endlagen ermöglicht, in denen die jeweilige Nutzvorrichtung im betätigten oder unbetätigten Zustand ohne die Zuführung von Fremdenergie gehalten werden.

Diese Problemstellung wird mit den Merkmalen des Anspruchs 1 gelöst. Dazu weist die in einem Gehäuse angeordnete Rastmechanik einen von der Antriebsvorrichtung betätigbaren Schlitten auf, der sich in Wirkrichtung des Abtriebselements am Gehäuse mittels eines Federelementes oder eines Federsystems abstützt. Im oder am Schlitten ist das Abtriebselement verschieb- oder verschwenkbar gelagert. Das Abtriebselement stützt sich in seiner Wirkrichtung federbelastet am Schlitten ab. Der Schlitten ist mit dem Gehäuse über ein zur Rastmechanik gehörendes Koppelelement gekoppelt. Das Koppelelement ist entweder am Gehäuse gelagert und am oder im Schlitten entlang einer Rastbahn geführt oder es ist am Schlitten gelagert und am Gehäuse entlang einer Rastbahn geführt.

Mit der Erfindung wird eine Rastmechanik als Teil einer Nutzvorrichtung vorgestellt, die eine Hub- oder Schwenkbewegung der Nutzvorrichtung mittels eines bistabilen Formrichtgesperres in ihren Endlagen mechanisch arretiert. Dazu wird zwischen einem Abtriebselement, das - z.B. in Gestalt einer Schubstange - direkt auf die Antriebsteile der Nutzvorrichtung wirkt, und der Antriebsvorrichtung ein Schlitten und ein Koppelelement angeordnet. Das z.B. am Gehäuse gelagerte Koppelelement greift in eine am Schlitten angeordnete Rastbahn ein, die den Hub des Schlittens in der Schlittenverfahrrichtung begrenzt.

Die Rastbahn wird z.B. durch einen am Schlitten angeordneten Kulissenkanal realisiert. In die Kulissenbahn greift ein an dem Koppelelement befestigter Führungszapfen ein. Alternativ hierzu kann die Rastbahn auch eine erhabene Struktur z.B. in Form eines einen geschlossenen Kurvenzug darstellenden Steges sein. Das freischwingende Ende des Koppelelements tastet in diesem Falle den gekrümmten Steg mit einem gabelförmigen Tastelement ab.

Selbstverständlich kann auch der Schlitten das Koppelelement tragen, während am Gehäuse die Rastbahn angeordnet ist.

Weitere Einzelheiten der Erfindung ergeben sich aus den Unteransprüchen und der nachfolgenden Beschreibung mindestens einer schematisch dargestellten Ausführungsform.
- Figur 1:: Perspektivische Ansicht einer Klemmvorrichtung mit zwei Keilgetrieben und einer Rastmechanik;
- Figur 2:: vergrößerte Ansicht von zwei Keilgetrieben und einer Rastmechanik, ungeklemmt;
- Figur 3:: wie Figur 2, jedoch geklemmt;
- Figur 4:: Käfig des zweiten Schiebekeilgetriebes;
- Figur 5:: horizontaler Längsschnitt durch die Schiebekeilgetriebe und das Reibgehemme, ungeklemmt;
- Figur 6:: wie Figur 5, jedoch vorgeklemmt;
- Figur 7:: wie Figur 6, jedoch geklemmt;
- Figur 8:: Schnitt durch schematisch dargestellte Schiebekeilgetriebe in Gleitpaarung in drei Positionen
- Figur 9:: Schnitt durch schematisch dargestellte Schiebekeilgetriebe mit einer Gleitpaarung und einer Wälzpaarung in drei Positionen
- Figur 10:: Schnitt durch schematisch dargestellte Schiebekeilgetriebe in Gleitpaarung in drei Positionen
- Figur 11:: Rückansicht der Vorrichtung mit Führungsschiene;
- Figur 12:: vertikaler Längsschnitt der Vorrichtung in geklemmter Position;
- Figur 13:: wie Figur 12, jedoch während des Lösens der Rastmechanik;
- Figur 14:: Draufsicht auf den Kulissenkanal der Rastmechanik nach den Figuren 2 und 3;
- Figur 15:: Draufsicht auf einen Kulissenkanal mit anderer Rastbahn;
- Figur 16:: perspektivische Draufsicht auf eine Klemmvorrichtung mit einem Querschieber als Koppelelement.

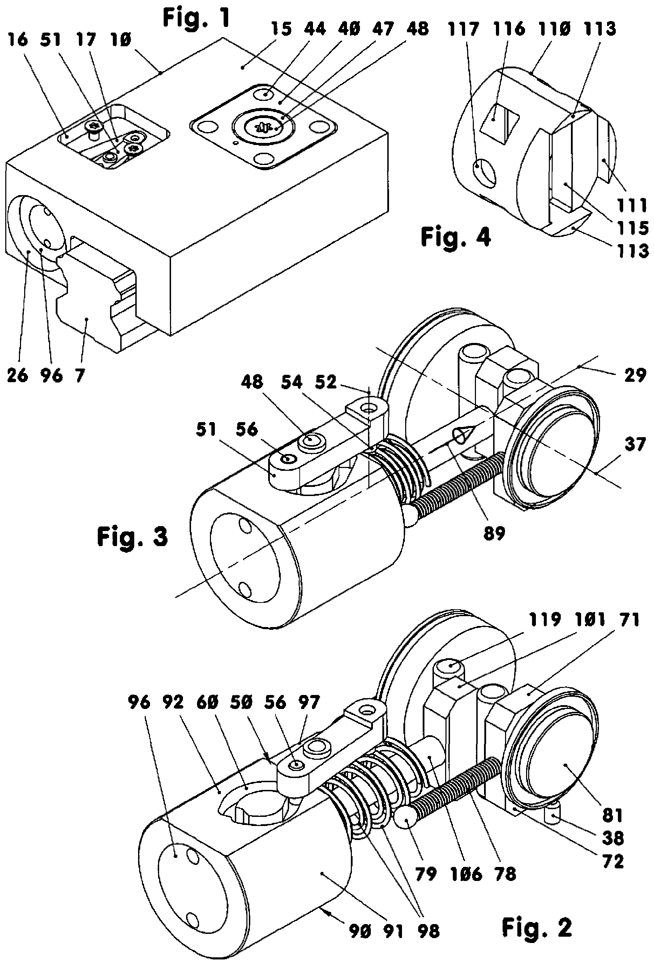

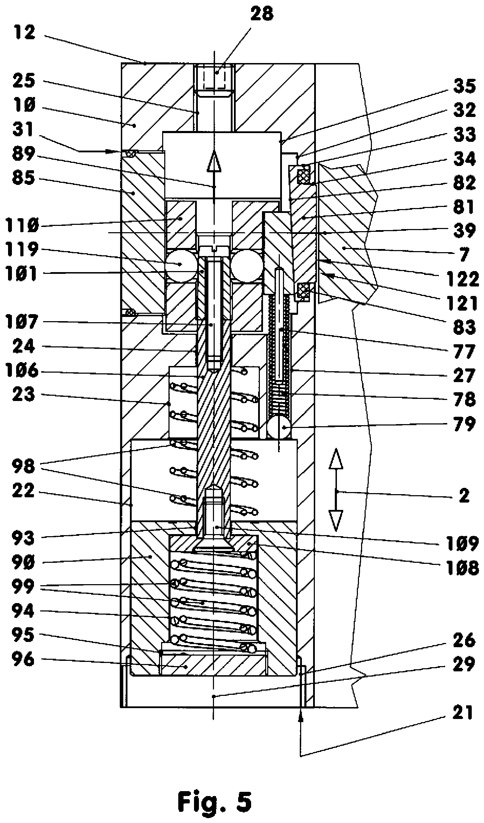

Die Figur 1 zeigt eine Klemm- und/oder Bremsvorrichtung, dessen Reibgehemme (121, 131), vgl. Figur 5, mittels eines Antriebes betätigbar ist. Die Vorrichtung umgreift mit ihrem c-förmigen Grundkörper (10) eine Führungsschiene (7). Im Grundkörper (10) bzw. im Gehäuse befinden sich zwischen einer adaptierbaren - hier nicht dargestellten - Antriebsvorrichtung und dem Reibgehemme (121, 131) zwei hintereinander geschaltete Schiebekeilgetriebe (70, 100). Die Schiebekeilgetriebe (70, 100) sind mittels einer Rastmechanik (50), in Form eines bistabilen Formrichtgesperres, mechanisch in einer geklemmten und einer ungeklemmten Position gesichert.

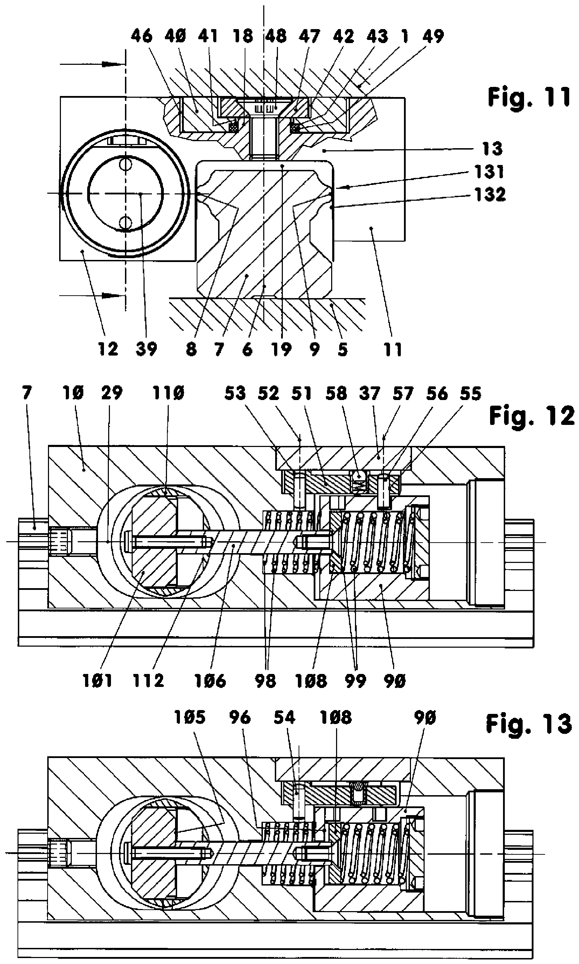

Zur Befestigung einer Antriebsvorrichtung am Grundkörper (10) weist dieser in der Nähe seiner rückwärtigen Stirnwand z.B. ein Feingewinde (26) auf. Das Gehäuse (10) ist in Figur 1 ohne einen Deckel (37), vgl. Figur 12, dargestellt, um die Anordnung des Reibgesperres zu zeigen.

Die Vorrichtung ist über den Grundkörper (10) an einem Maschinenschlitten (1) befestigt, der an der Führungsschiene (7) abgebremst oder geklemmt werden soll, vgl. Figur 11. Die doppelprismatische Führungsschiene (7) verläuft parallel zur Schlittenbewegungsrichtung bzw. zur Führungslängsrichtung (2).

Die Führungsschiene (7) besteht aus einem Stab mit einem annähernd quaderförmigen Hüllquerschnitt, in den beidseitig je eine im Wesentlichen v-förmige Nut mit verbreitertem Nutgrund eingearbeitet ist. Die Führungsschiene (7) kontaktiert über ihre Bodenfläche z.B. das sie tragende Maschinenbett (5).

Die Führungsschiene (7) hat oberhalb der v-förmigen Nut u.a. zwei Nebenflächen (8, 9), die sich - bezogen auf die vertikale Mittenlängsebene (6) - spiegelbildlich gegenüber liegen. Beide Nebenflächen (8, 9) sind zueinander parallel ausgerichtet. Sie dienen den Reibbacken (122, 132) als Anlageflächen. Bei der vorliegenden Variante kann die rechte Reibbacke (132), also die, die in der Gehäusezone (11) liegt, auch weggelassen werden.

Der z.B. einteilige, aus 16 MnCr 5 gefertigte Grundkörper (10) ist im Wesentlichen ein quaderförmiges Bauteil, das an seiner Unterseite eine zentrale Nut (19) mit einem z.B. rechteckigen Querschnitt aufweist. In die Nut (19) taucht die Führungsschiene (7) nach Figur 11 zu ca. drei Vierteln ein. Der Grundkörper (10) hat beispielsweise folgende Abmessungen: 78 mm x 59 mm x 28 mm.

Das Gehäuse (10) hat eine rechte (11) und eine linke Gehäusezone (12). Beide Zonen (11, 12) befinden sich unterhalb einer Flanschzone (13).

In der Flanschzone (13) des Gehäuses (10) ist u.a. ein plattenförmiger, großflächiger Vorrichtungsträger (40) gelagert, vgl. Figuren 1 und 11. Er besteht aus einer rechteckigen oder quadratischen Platte, die in den Bereichen ihrer Ecken je eine Gewindebohrung (44) zur Befestigung am Maschinenschlitten (1) aufweist. Mittig ist in die Platte von oben her eine Durchgangsbohrung (41) mit einer großen Zylindersenkung (42) eingearbeitet, in der eine Scheibe (47) platziert ist, die z.B. mittels einer Senkschraube (48) am Gehäuse (10) befestigt ist. An der Unterseite des Vorrichtungsträgers (40) ist, um die zentrale Durchgangsbohrung (41) herum, eine kleinere Zylindersenkung (43) zur Aufnahme eines ring- bzw. torusförmigen Elastomerkörpers (49) angeordnet.

Der Vorrichtungsträger (40) sitzt in einer rechteckigen Ausnehmung (46) des Gehäuses (10). Im Zentrum der Ausnehmung (46) befindet sich ein zentraler, aufgebohrter Zapfen (18) mit planer Stirnfläche und Innengewinde. Der Außendurchmesser des Zapfens (18) ist im z.B. 2 mm kleiner als der Innendurchmesser der zentralen Durchgangsbohrung (41) an ihrer engsten Stelle. Zwischen dem Zapfen (18) und der kleineren Zylindersenkung (43) ist der Elastomerkörper (49) eingeklemmt. Der Außendurchmesser der Scheibe (47) ist ebenfalls z.B. 2 mm kleiner als der Innendurchmesser der großen Zylindersenkung (42) der Platte.

Der Vorrichtungsträger (40) hat in der Ausnehmung (46) in Klemmrichtung (3) ein Spiel von z.B. 2 mm. In Führungslängsrichtung (2) ist das Spiel gerade so groß, dass sich der Vorrichtungsträger (40) in Klemmrichtung (3) noch ohne Klemmen verschieben lässt. Der zwischen dem Vorrichtungsträger (40) und dem Gehäuse (10) angeordnete Elastomerkörper (49) drückt den Vorrichtungsträger (40) mit dem planen Grund der Zylindersenkung (42) gegen die ebenfalls plane Unterseite der Scheibe (47), sodass der Vorrichtungsträger (40) ca. 0,1 bis 0,5 mm über das Niveau der Oberseite des Gehäuses (10) übersteht.

Nach den Figuren 5 bis 7 weist die linke Gehäusezone (12) z.B. zum Adaptieren einer Antriebsvorrichtung, zur Aufnahme der Schiebekeilgetriebe (70, 100) und des Formrichtgesperres (50) eine mehrstufige Stufenbohrung (21) auf, deren Mittellinie (29) parallel zur Führungslängsrichtung (2) orientiert ist, vgl. Figur 5. Die Stufenbohrung (21) setzt sich aus einer Zylinderflächenbohrung (22), einem Federtopf (23), einer Durchbruchsbohrung (24) und einer Gewindebohrung (25) zusammen. Im Bereich der Öffnung der Zylinderflächenbohrung (22), deren Durchmesser z.B. 20 mm misst, befindet sich z.B. ein Feingewinde (26) zur Adaption einer Antriebsvorrichtung.

An die Zylinderflächenbohrung (22), in der ein Schlitten (90) geführt ist, schließt sich über einen planen Gehäusebund der Federtopf (23) an. Der plane Gehäusebund dient als vorderer Anschlag für den Schlitten (90) bzw. als vorderes Ende der Schlittenführung. Der Federtopf (23), der zwei Schraubendruckfedern (98) führt, hat einen kleineren Querschnitt als die Zylinderflächenbohrung (22). An den Federtopf (23) schließt sich eine Durchbruchsbohrung (24) an. Sie hat z.B. einen Durchmesser von 4,3 mm. Die Durchbruchsbohrung (24) wird von einer Schubstange (106) durchquert.

Die Durchbruchsbohrung (24) mündet in eine im vertikalen Längsschnitt ovale Käfiglagerausnehmung (35), in der ein Käfig eines Schiebekeilgetriebes (100) geführt ist, vgl. Figuren 12 und 13. Die Käfiglagerausnehmung (35) ist Teil einer quer zur Stufenbohrung (21) ausgerichteten Gehemmebohrung (31). Ihre Mittellinie (39) schneidet die Mittellinie (29).

Die Gehemmebohrung (31) hat neben der Käfiglagerausnehmung (35) drei abgestufte Bereiche, vgl. Figur 5. Von der Gehäuseaußenseite her sind das eine Hauptbohrung (32), eine Druckstückführungsbohrung (33) und eine Austrittsbohrung (34). Die Hauptbohrung (32) mündet in die - in Führungslängsrichtung - breitere Käfiglagerausnehmung (35). In ihrem Feingewinde sitzt ein als Stützelement wirkender Einschraubdeckel (85).

In der Druckstückführungsbohrung (33) ist das Schrägdruckstück (81) gelagert. Es hat die Form eines zylindrischen Kolbens mit angeformter Kolbenstange. Die Kolbenstange ragt bei betätigtem Reibgehemme (121) aus der Austrittsbohrung (34) heraus. Am Übergang der Kolbenstange zum Kolben befindet sich eine umlaufende Stirnnut, in der ein elastischer Rückhubring (83) mit z.B. rechteckigem Einzelquerschnitt sitzt. Der elastische Rückhubring (83) stützt sich an einem zwischen der Druckstückführungsbohrung (33) und der Austrittsbohrung (34) gelegenen Gehäusebund ab. Nach Figur 2 hat das Schrägdruckstück (81) im unteren Bereich eine Abflachung, an der zur Verdrehsicherung ein im Gehäuse (10) eingeschraubter Gewindestift (38) anliegt.

Die Kolbenstange des Schrägdruckstücks (81) bildet zugleich eine Reibbacke (122) des Reibgehemmes (121). Die außenseitige Stirnfläche des Schrägdruckstückes (81), die beim Klemmen die Führungsschiene (7) kontaktiert, weist ggf. einen Reibbelag auf.

Als Reibbelag wird beispielsweise ein pulvermetallurgisch hergestellter Reibwerkstoff auf Bronzebasis verwendet.

In der Verlängerung der Durchbruchsbohrung (24) befindet sich in der Vorderseite des Gehäuses (10) - zur Erleichterung der Montage - eine Gewindebohrung (25), in die ein Gewindestift (28) eingeschraubt ist.

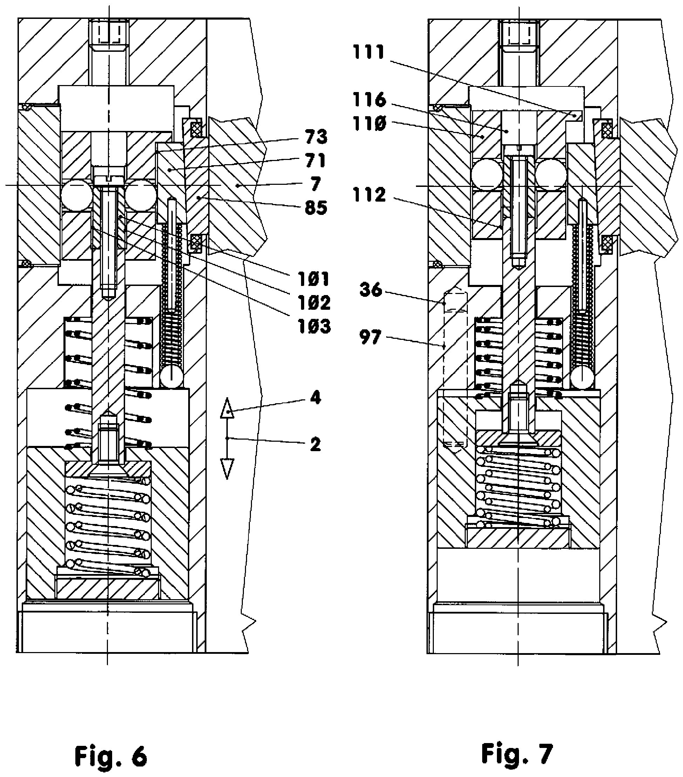

Die Zylinderflächenbohrung (22) und die Käfiglagerausnehmung (35) sind zusätzlich über eine zur Mittellinie (29) parallele Federführungsbohrung (27) verbunden, vgl. Figur 5. Ferner befindet sich in diesem mittleren Gehäusebereich in der Bodenfläche der Zylinderflächenbohrung (22) eine weitere, ebenfalls zur Mittellinie (29) parallele Verdrehsicherungsbohrung (36), vgl. Figur 7.

Der Grundkörper (10) hat in seiner Oberseite eine Ausnehmung (16, 17). Der obere Bereich der Ausnehmung (16, 17) ist eine nahezu rechteckige Vertiefung (16) zur Aufnahme eines Deckels (37), vgl. Figur 12. Die Vertiefung (16) geht in eine im Querschnitt zumindest annähernd dreieckige Ausnehmung (17) über, die die Zylinderflächenbohrung (22) schneidet. Die Ausnehmung (17) umschließt einen Raum, in dem sich eine Rastschwinge als Koppelelement (51) des Formrichtgesperres (50) bewegt.

In der Käfiglagerausnehmung (35) ist in der Nähe der Nut (19) das erste Schiebekeilgetriebe (70) angeordnet. Es besteht aus dem Schrägdruckstück (81) und dem Folgekeil (71). Der im Längsschnitt achteckige Folgekeil (71), vgl. Figuren 2 und 3, liegt mit seiner Keilfläche (72) am Schrägdruckstück (81) an. Die Keilfläche (72) des Folgekeils (71) und die Keilfläche (82) des Schrägdruckstücks (81) schließen mit der Führungslängsrichtung (2) einen Winkel von 2,5 Winkelgraden ein. Der genannte Winkel kann je nach Ausführungsform in einem Bereich von 2 bis 10 Winkelgraden liegen. Dieser Winkelbereich gewährleistet eine Selbsthemmung zwischen dem gleitenden Folgekeil (71) und dem Schrägdruckstück (81), sofern beide Bauteile aus einer Stahllegierung bestehen und sich zumindest weitgehend trocken kontaktieren.

Der Folgekeil (71) hat einen rechteckigen Querschnitt, der sich in Richtung der vorderen Stirnfläche (74) einachsig und z.B. linear verjüngt.

Im Folgekeil (71) steckt rückseitig eine Führungsstange (77), die in die Federführungsbohrung (27) hineinragt. In der Federführungsbohrung (27) ist eine Klemmkugel (79) eingestaucht. Auf der Federführungsstange (77) ist zumindest bereichsweise als Federelement (78) eine Schraubendruckfeder geführt. Letztere stützt sich zwischen der Klemmkugel (79) und dem Folgekeil (71) ab.

Zwischen dem Folgekeil (71) und dem Stützelement (85) ist der beispielsweise aus Polyoxymethylen (POM) gefertigte Käfig (110) angeordnet. vgl. u.a. Figur 4. Der Käfig (110), der Teil eines zweiten Schiebekeilgetriebes (100) ist, ist hier ein Raumkörper, der aus zwei aneinander geformten gleichgroßen Zylinderteilstücken besteht. Jedes Zylinderteilstück hat den Querschnitt eines Kreisabschnittes, dessen Bogenhöhe kleiner ist als der des Kreisradius. Die Bogenhöhe entspricht z.B. ca. 83% des Kreisradius. Die gedachte, zwischen den Zylinderteilstücken gelegene, Kontaktebene wird als Käfigmittenlängsebene bezeichnet.

Parallel zur Käfigmittenlängsebene hat der Käfig (110) einen Durchgangskanal (115) mit einem zumindest annähernd rechteckigen Querschnitt. Der Durchgangskanal (115) wird durch die Käfigmittenlängsebene halbiert. In den beiden Endbereichen des Durchgangskanals (115) sitzen mit Spiel die Zylinderrollen (119).

Quer zur Käfigmittenlängsebene hat der Käfig (110) eine Schiebekeilausnehmung (116) mit einem ebenfalls zumindest annähernd rechteckigen Querschnitt. Die einseitig in den Käfig (110) eingearbeitete Schiebekeilausnehmung (116) erstreckt sich so weit in das Innere des Käfigs (110), dass sie die hier sichtbare Seite des Käfigs an zwei Stellen in Form zweier annähernd rechteckiger Fenster durchdringt. Zwischen den Fenstern befindet sich eine Querbohrung (117), die normal zur Käfigmittenlängsebene orientiert ist und beispielsweise mittig auf die Schiebekeilausnehmung (116) trifft. Bei eingebautem Käfig (110) wird die Querbohrung (117) von der Schubstange (106) durchquert, vgl. auch Figuren 12 und 13.

Der Käfig (110) hat auf der dem Folgekeil (71) zugewandten Seite einen vorderen Anschlag (111). Auf dieser Seite befindet sich außerdem oberhalb und unterhalb des Durchgangskanals (115) jeweils ein vorspringender Führungssteg (113). Die Führungsstege (113) führen den Folgekeil (71).

Der Boden der Schiebekeilausnehmung (116), vgl. Figuren 12 und 13, bildet einen hinteren Käfiganschlag (112).

Nach Figur 5 ist zwischen den Zylinderrollen (119) der z.B. ebenfalls im Längsschnitt achteckige Antriebskeil (101) angeordnet, vgl. auch Figuren 2 und 3. Der Antriebskeil (101) hat seitlich zwei Keilflächen (102, 103), die gegenüber einer Einkeilrichtung (89) jeweils einen Winkel von 0,4 bis 1 Winkelgrade einschließen. Im Ausführungsbeispiel beträgt der Winkel 0,65 Winkelgrade.

Auch der Antriebskeil (101) hat einen rechteckigen Querschnitt, der sich in Einkeilrichtung (89) einachsig und z.B. linear verjüngt.

Die Einkeilrichtung (89) ist dabei diejenige Verschieberichtung des antreibenden Keiles, bei der eine quer zur Verschieberichtung orientierte Spreizwirkung der gepaarten Schiebekeile eines Getriebes entsteht. Sie ist bei dem Ausführungsbeispiel nach Figur 5 bei fast allen Antriebskeilpositionen nicht parallel zur Führungslängsrichtung (2).

Nach der Figur 3, 5 und 12 liegen die Schwerpunkte der Schiebekeile (71, 101) in der gemeinsamen Ebene der Mittellinien (29, 39) und somit auf der mittleren Höhe der Nebenflächen (8,9) der Führungsschiene (7), vgl. Figur 11, sodass beim Klemmen auf die Schiebekeile (71, 101) keine Drehmomente um die Mittellinien (29) entstehen.

Der Antriebskeil (101) ist am vorderen Ende einer z.B. zylindrischen Schubstange (106) mittels einer Schraube (107) starr befestigt. Am hinteren Ende der Schubstange (106) ist zentriert ein scheibenförmiger, kreisrunder Teller (108) mittels der Senkschraube (109) fest montiert. Diese Schubstange (106) bildet das zwischen zwei Endlagen bewegbare Abtriebselement der Vorrichtung.

Der Teller ist in einem Schlitten (90) federbelastet geführt. Der Schlitten (90) ist wiederum in der Zylinderflächenbohrung (22) des Grundkörpers (10) gelagert und geführt.

Der Schlitten (90) ist im Wesentlichen ein topfförmiges Bauteil, das zumindest bereichsweise eine zylindrische Außenkontur aufweist. Die Außenkontur hat einen Durchmesser von z.B. 20 mm. Parallel zur Mittellinie (29) der zylindrischen Außenkontur (91) zeigt sie eine plane Abflachung (92) auf. Der kürzeste Abstand zwischen der Mittellinie (29) und der Abflachung (92) beträgt 8 mm.

Der Schlitten (90) weist eine zentrale durchgehende Stufenbohrung (93-95) auf. Der vordere Bereich der Stufenbohrung ist ein Durchbruchsabschnitt (93), der mittlere Bereich ein zylindrischer Führungsabschnitt (94) und der hintere Bereich ein Deckellagerabschnitt (95) mit Innengewinde. Der Führungsabschnitt (94) hat einen Durchmesser von z.B. 10,6 mm. In ihm ist der Teller (108) geführt. Im Deckellagerabschnitt (95) ist ein Deckel (96) eingeschraubt. Zwischen dem Deckel (96) und dem Teller (108) sind zwei Federelemente (99), z.B. zwei Schraubendruckfedern, eingebaut. Die Schraubendruckfedern (99) können, wie auch die vor dem Schlitten (90) gelegenen Schraubendruckfedern (98), gegenläufige Steigungen haben. Die Federkraft des Systems aus den parallel geschalteten Federelementen (99) ist bei jedem Hub größer als die Federkraft des Systems aus den parallel geschalteten Federelementen (98).

Eine auf den Antriebskeil (101) wirkende Antriebsvorrichtung verschiebt z.B. zum Bremsen, Klemmen oder Greifen den Schlitten (90) nach vorn und beim Lösen in die entgegengesetzte Richtung. Im Ausführungsbeispiel, nach Figur 5 bis 7, spannt die den Schlitten (90) in Antriebsrichtung (4) schiebende Antriebsvorrichtung die zumindest geringfühig vorgespannten Schraubendruckfedern (98). Letztere bilden hier einen Federspeicher, dessen Energie erst wieder beim Lösen der Brems-, Klemm- oder Greifvorrichtung benötigt wird.

Wird kein Formrichtgesperre (50) verwendet, kann die Schubstange (106) bzw. der Teller (108) in Führungslängsrichtung unnachgiebig angelenkt werden. Die Antriebsvorrichtung kann aber auch direkt auf die Schubstange (106) wirken.

In der vorderen Stirnfläche des Schlittens (90) ist eine zur Mittellinie (29) parallele Bohrung eingearbeitet, in der ein Verdrehsicherungszapfen (97) mittels eines Querpresssitzes steckt. Der Verdrehsicherungszapfen (97) führt den Schlitten (90) verdrehsicher in der Verdrehsicherungsbohrung (36) des Gehäuses (10), vgl. Figuren 2 und 7.

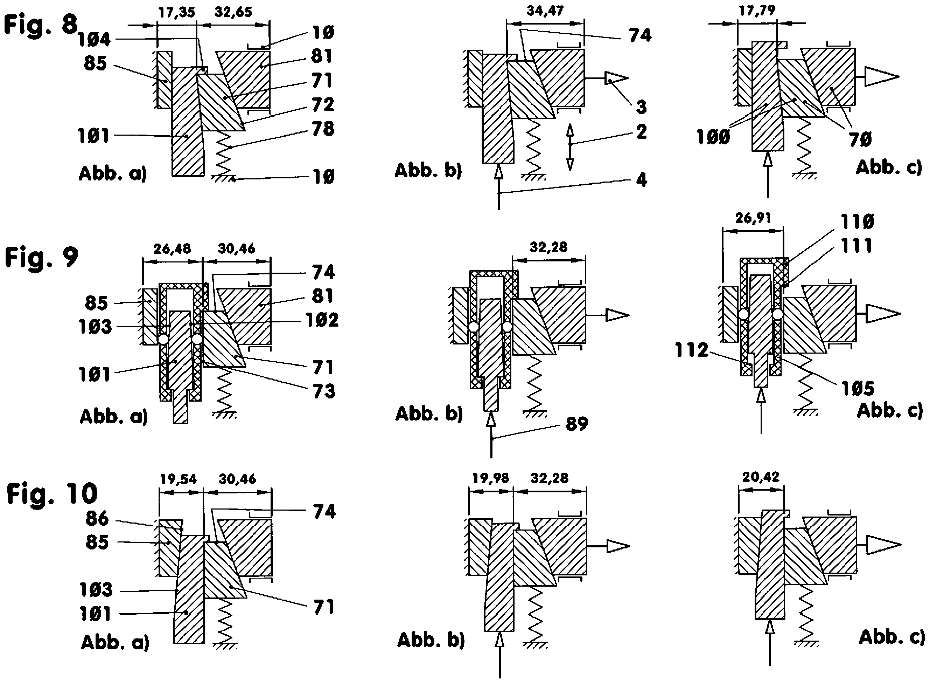

In den Figuren 8 bis 10 sind beispielhaft drei Arten des Zusammenwirkens von je zwei Schiebekeilgetrieben (70, 100) schematisch dargestellt. Die Keilwinkel dieser Schiebekeilgetriebe sind zur optischen Funktionsverdeutlichung gegenüber der in den Figuren 1 bis 4 und 11 bis 15 dargestellten Variante sehr groß gewählt. Das in den Figuren 1 bis 4 und 11 bis 15 beschriebene Funktionsprinzip entspricht in den schematischen Darstellungen der Figur 9.

Nach Figur 8, Abb. a) besteht ein erstes Schiebekeilgetriebe (70) aus einem in einem Gehäuse (10) geführten Schrägdruckstück (81) und einem Folgekeil (71). Das Schrägdruckstück (81) ist Teil des Reibgehemmes (121). Es liegt bei geklemmter Vorrichtung an der Führungsschiene (7) an, vgl. auch Figur 5. Der Folgekeil (71), der mit seiner rechten Keilfläche (72) am Schrägdruckstück (81) anliegt, stützt sich über ein Federelement (78), hier z.B. eine Schraubendruckfeder, am Gehäuse (10) ab. Seine ebenfalls als Keilfläche (73) ausgebildete Rückseite und seine Stirnfläche (74) liegen zumindest partiell an einem Antriebskeil (101) an. Die Keilflächen (72, 82) sind um 20 Winkelgrade gegenüber der Führungslängsrichtung (2) des Antriebskeils (101) gleichsinnig geneigt. Die linke Keilfläche (73) des Folgekeils (71) kontaktiert die Keilfläche (102) des Antriebskeils (101). Beide Keilflächen (73, 102) sind gegenüber der Führungslängsrichtung (2) gleichsinnig geneigt. Der Keilwinkel beträgt hier z.B. 5 Winkelgrade. Für die Anlage der Stirnfläche (74) des Folgekeils (71) weist der Antriebskeil (101) einen vorderen Anschlag (104) auf.

Der Antriebskeil (101) ist Teil des zweiten Schiebekeilgetriebes (100), das ebenfalls ein Gleitschiebekeilgetriebe ist. Letzteres hat neben dem Antriebskeil (101) ein Stützelement (85). Das Stützelement (85) ist am Gehäuse (10) befestigt. Ggf. ist es auch ein angeformtes Bestandteil des Gehäuses (10). Der Antriebskeil (101) und das Stützelement(85) kontaktieren sich direkt über Planflächen, die parallel zur Führungslängsrichtung (2) orientiert sind. Nach Figur 8, Abb. a) befinden sich die Schiebekeilgetriebe (70, 100) in einer hinteren, unbetätigten Position. Das Schrägdruckstück (81) ist nicht zum Klemmen, Bremsen oder Greifen ausgefahren.

Wirkt nun eine Antriebsvorrichtung auf den Antriebskeil (101), um ihn in Einkeilrichtung (89) zu bewegen, gleitet dieser z.B. kontinuierlich nach vorn bzw. nach den Figuren 8 bis 10 nach oben.

Da das zweite Schiebekeilgetriebe (100) ohne die Anlage des Schrägdruckstückes (81) an der Führungsschiene (7) keine nennenswerte Gegenkraft erfährt, folgt der Folgekeil (71), angetrieben von dem vorgespannten Federelement (78) dem Antriebskeil (101). Dabei schiebt Letzterer das Schrägdruckstück (81) gegen die Führungsschiene (7), vgl. Figur 6. Sobald sich das Schrägdruckstück (81) an der Führungsschiene (7) anlegt, diese ggf. sogar noch geringfügig nach rechts verschiebt, bis die Führungsschiene (7) z.B. nahezu spielfrei im Gehäuse (10) umgriffen wird, wird die Haftreibung zwischen dem Schrägdruckstück (81) und dem Folgekeil (71) so groß, dass sich der Folgekeil (71) nicht mehr in der Einkeilrichtung (89) weiterbewegt. Die Spreizbreite des ersten Schiebekeilgetriebes (70) hat sich beispielsweise nach Figur 8 von 32,65 Einheitslängen auf 34,47 Einheitslängen erhöht.

Trotz des Stoppens des Folgekeils (71) gleitet der Antriebskeil (101) - angetrieben von der Antriebsvorrichtung - in Einkeilrichtung (89) weiter, vgl. Figur 8, Abb. b). Aufgrund der Orientierung der Keilflächen (73) und (102) wird das erste Schiebekeilgetriebe (70) zum Festklemmen als Block mit großer Kraft gegen die Führungsschiene (7) gepresst, vgl. Figur 8, Abb. c). Die Spreizbreite des zweiten Schiebekeilgetriebes (100) hat sich nach Figur 8 von 17,35 Einheitslängen auf
17,79 Einheitslängen erhöht. Zum Erreichen dieser Zahlenwerte wurden beide Keile (71, 101) jeweils um 5 Einheitslängen in Antriebsrichtung (4) der Antriebsvorrichtung bewegt.

Zum Lösen der klemmenden Wirkung des Reibgehemmes (121, 131) wird der Antriebskeil (101) mittels der Antriebsvorrichtung zurückgezogen. Hierbei legt sich - nach einer ersten Verfahrstrecke - der Anschlag (104) des Antriebskeils (101) an der vorderen Stirnfläche des Folgekeils (71) an, um ihn in seine hintere Position, vgl. Figur 8, Abb. a) zu schleppen. Bei dieser Schleppbewegung wird das Federelement (78) als Federspeicher vorgespannt. Mit der Rückwärtsbewegung der Keile (101, 71) bewegt sich auch das Schrägdruckstück (81) entgegen der Klemmrichtung (3) in seine Ausgangslage zurück. Dabei wird es mittels eines vorgespannten Elastomerkörpers (83), vgl. Figur 5, oder eines anderen Federelements unterstützt.

Nach Figur 9 stützt sich der Antriebskeil (101) zwischen dem Folgekeil (71) und dem Stützelement (85) wälzgelagert ab, vgl. auch Figuren 5 bis 6. Dazu wird der Antriebskeil (101) zumindest partiell von einem z.B. zwei Zylinderrollen (119) führenden Käfig (110) umgeben.

In dieser Variante hat der Folgekeil (71) eine Rückseite (73), die parallel zur Abstützseite des Stützelements (85) ausgerichtet ist. Der Antriebskeil (101) hat eine rechte (102) und eine linke Keilfläche (103). Jede der Keilflächen (102, 103) ist gegenüber der Führungslängsrichtung (2) z.B. um 2,5 Winkelgrade wechselsinnig geneigt. Sie schließen somit einen Keilwinkel von 85 Winkelgraden ein, dessen Spitze in Antriebsrichtung (4) vor dem Antriebskeil (101) liegt.

Der Käfig (110) weist mindestens zwei Anschläge (111, 112) auf, die in entgegengesetzte Richtungen wirken. Der vordere Anschlag (111) ist vergleichbar mit dem Anschlag (104) des Antriebskeils (101) aus Figur 8. Der hintere Anschlag (112) liegt nach Figur 9, Abb. a) und b) z.B. an der Rückseite des Antriebskeiles (101) an, um bei einem Zurückfahren des Antriebskeiles (101) den Folgekeil (71) mit Hilfe des vorderen Anschlags (111) des Käfigs (110) zurückziehen zu können.

Beim Klemmvorgang legt sich in einem ersten Schritt, wie bei Figur 8, das Schrägdruckstück (81) an der Führungsstange (7) an, während der Folgekeil (71) an ihm entlanggleitet, vgl. auch Figur 6. Die Spreizbreite vergrößert sich nach Figur 9 von 30,46 auf 32,28 Einheitslängen.

Im zweiten Schritt, in dem das zweite Schiebekeilgetriebe (100) die Klemmkraft erzeugt, vgl. auch Figur 8, rollt der Antriebskeil (101) um 10 Einheitslängen in Antriebsrichtung (4), um die Spreizbreite dieses zweiten Schiebekeilgetriebes (100) von 26,48 auf 26,91 Einheitslängen zu ändern. Der Käfig (110) ist hierbei nur um 5 Einheitslängen nach vorne gewandert. Der Antriebskeil (101) hat sich dabei vom hinteren Anschlag (112) des Käfigs (110) gelöst.

Die Figur 10 zeigt zwei Schiebekeilgetriebe (70, 100), bei denen die Keile (71, 101) beider Keilpaare aneinander entlanggleiten. Das erste Schiebekeilgetriebe (70) entspricht hier den Schiebekeilen nach Figur 9. Der Antriebskeil (101) liegt über eine Planfläche (102) am Folgekeil (71) an, die parallel zur Führungslängsrichtung (2) orientiert ist. Das Stützelement (85) kontaktiert er über eine Keilfläche (103), wobei die Keilfläche (86) des Stützelements (85) und die des Antriebskeils (101) mit dem gleichen Winkel, z.B. 5 Winkelgraden, in die gleiche Richtung geneigt sind.

Die Besonderheit ist hier, dass sich schon beim ersten Verschieben des Antriebskeils (101) auch durch das zweite Schiebekeilgetriebe (100) eine in Klemmrichtung zustellende Bewegung ergibt. Während das erste Schiebekeilgetriebe (70) seine Spreizbreite von 30,46 auf 32,28 Einheitslängen ändert, vgl. auch Figur 5, vergrößert sich die Spreizbreite beim ersten Verschieben von 19,54 auf 19,98 Einheitslängen und beim zweiten Verschieben, wenn das zweite Schiebekeilgetriebe (100) als Block bewegt wird, von 19,98 auf 20,42 Einheitslängen.

Die Variante nach Figur 10 kann mit der Variante aus Figur 8 so kombiniert werden, dass der Folgekeil (71) eine zweite zum Antriebskeil (101) hin orientierte Keilfläche erhält. Der Antriebskeil (101) hat dann zwei Keilflächen, wie dies auch aus Figur 5 bzw. 9 bekannt ist. Die Neigungen der einzelnen Keilflächen (102, 103) gegenüber der Einkeilrichtung (89) und/oder gegenüber der Führungslängsrichtung (2) müssen nicht identisch sein.

Zudem können bei den Varianten nach Figur 8 und Figur 10 jeweils zwischen dem Antriebskeil (101) und dem Folgekeil (71) sowie zwischen dem Antriebskeil (101) und dem Stützelement (85) ein Käfig mit zwei oder mehr Zylinderrollen oder Kugeln angeordnet sein.

Um die Vorrichtung z.B. nur mit Hilfe eines Druckluftstoßes oder eines Stromimpulses betätigen oder lösen zu können ist hier zwischen dem Schlitten (90) und dem Grundkörper (10) das bistabile Formrichtgesperre (50) angeordnet. Es umfasst neben dem Gehäuse (10) und dem Schlitten (90) eine am Schlitten (90) angeordnete Rastbahn (69) und eine am Gehäuse (10) sich abstützende Rastschwinge (51), deren schwingendes Ende in oder an der Rastbahn (69) geführt ist.

Die Rastschwinge (51) ist im Wesentlichen ein Stab mit rechteckigem Querschnitt. Er weist in jedem Endbereich und im mittleren Bereich jeweils eine Bohrung auf. Im vorderen Endbereich befindet sich die Schwenkbohrung (53), in der sich die Rastschwinge (51) um einen Schwenkbolzen (53) dreht. Der Schwenkbolzen (54) ist im Grundkörper (10) in einer Bohrung mittels eines Querpresssitzes befestigt, vgl. Figuren 12 und 13. Die Mittellinie des Schwenkbolzens (54) ist dessen gedachte Schwenkachse (52), die senkrecht die Mittellinie (29) schneidet. Im vorderen Bereich ist die Zapfenbohrung (55) angeordnet, in die ein Führungszapfen (56) eingepresst ist. Letzterer ragt nach unten aus der Rastschwinge (51) heraus. In der Nähe des Führungszapfen ist in der dritten Bohrung ein Kugeldruckstück (58) eingepresst. Aus dem Kugeldruckstück (58) ragt oben eine Kugel heraus, die bei montierter Vorrichtung federbelastet an der Unterseite des Deckels (37) anliegt. Das Kugeldruckstück (58) fixiert reibschlüssig jede beliebige Lage der Rastschwinge (51) gegenüber dem Deckel (37).

Die Mittellinien aller drei Bohrungen der Rastschwinge (51) liegen z.B. in einer Ebene.

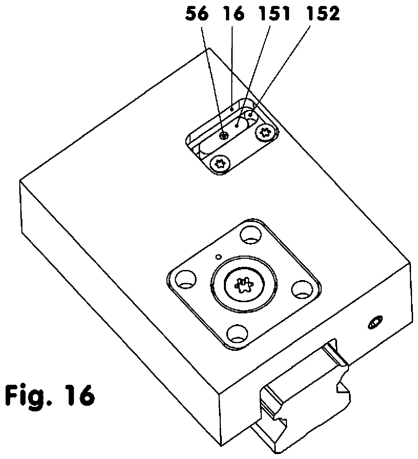

Anstelle der Rastschwinge (51) kann als Koppelelement auch ein Querschieber (151) verwendet werden, vgl. Figur 16. In dieser Figur ist eine perspektivische Draufsicht auf eine Klemmvorrichtung gezeigt, bei der der Deckel (37), vgl. Figur 12, weggelassen ist. In der Ausnehmung (16) befindet sich anstelle der bisherigen Ausnehmung (17) eine Quernut (152) in der ein passstiftartiger Querschieber (151) quer zur Führungslängsrichtung verschiebbar angeordnet ist. Der Querschieber (151) trägt z.B. mittig den Führungszapfen (56), der in den Kulissenkanal (60) des Schlittens (90) eingreift.

Es ist auch denkbar, den Führungszapfen (56) starr am Gehäuse (10) zu befestigen. Ersatzweise befindet sich bei dieser Lösung der Kulissenkanal (60) auf einem kleinen Querschlitten, der quer zur Führungslängsrichtung (2) am Schlitten (90) gelagert ist.

Im Ausführungsbeispiel ist die Rastbahn (69) in Form eines Kulissenkanals (60) in die Abflachung (92) des Schlittens (90) eingearbeitet, vgl. Figuren 2, 3, 14 und 15. In den Kulissenkanal (60), der z.B. einen rechteckigen Querschnitt hat, ragt der Führungszapfen (56) mit teilweise geringem Seitenspiel mindestens 2 mm tief hinein.

Ggf. sitzt der Führungszapfen (56) wälzgelagert in der Zapfenbohrung (55) oder er trägt an seinem freien, in den Kulissenkanal (60) hineinragenden, Ende eine gleit- oder wälzgelagerte Rolle.

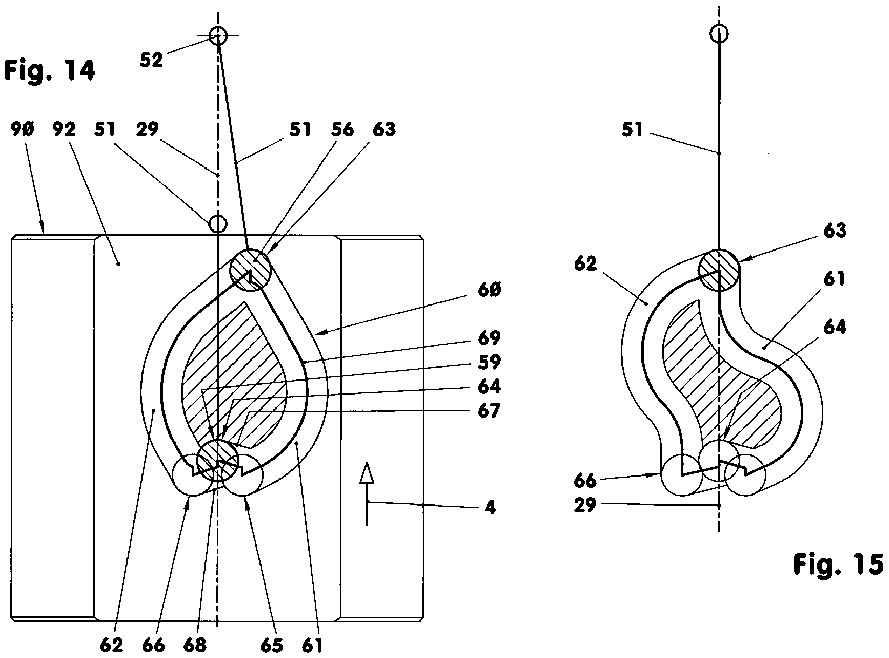

Die Mittellinie (57) des Führungszapfens (56) beschreibt die Rastbahn (69) innerhalb des Kulissenkanals (60). Die Rastbahn (69) stellt einen geschlossenen Kurvenzug dar, der mehrere Unstetigkeitsstellen aufweist, vgl. Figuren 14 und 15. Im Kulissenkanal (60), der großteils aus einem Spannkanal (61) und einem Lösekanal (62) besteht, gibt es zwei Langzeithaltelagen (63, 64) und zwei Kurzzeithaltelagen (65, 66).

Die erste Langzeithaltelage (63) ist die Position, in der sich der Führungszapfen (56) nach Figur 2 befindet. Ihre Mitte liegt z.B. 1,6 mm nach rechts versetzt zur Mittellinie (29). Die Federelemente (98) halten hier den Schlitten (90) bei unbetätigter Vorrichtung in seiner hinteren Position. Wird nun der Schlitten (90) mittels der Antriebsvorrichtung nach vorn, also in Antriebsrichtung (4), bewegt, gleitet der Führungszapfen (56) im Spannkanal (61) - rechts der Mittellinie (29) - zwischen einer Innen- und einer Außenflanke des Kulissenkanals (60) geführt, nach hinten, bis er nach z.B. ca. 10 mm Hub in der ersten Kurzzeitposition (65) blockiert. Die Innenflanke ist hierbei diejenige Flanke, die den Bereich der Abflachung (92) abgrenzt, der vom Kulissenkanal (60) umschlossen wird.

Sobald der Antriebsimpuls der Antriebsvorrichtung beendet ist, drücken die Federelemente (98) den Schlitten (90) nach Figur 14 ca. 0,7 mm nach vorn. Der Führungszapfen (56) schlägt an der Fangflanke (67) an und wird durch diese nach links - unter einem Winkel von 15 Winkelgraden - in die stabile zweite Langzeithaltelage (64) gedrängt. Der Mittelpunkt dieser Langzeithaltelage (64) liegt - in Führungslängsrichtung (2) gemessen - somit 0,7 mm vor dem Mittelpunkt der ersten Kurzzeithaltelage (65). Im Bereich der Langzeithaltelage (64) bildet die Innenflanke eine Kerbe (59) aus, an der der Führungszapfen (56) sicher anliegt. Nach dem Ausführungsbeispiel ist nun die Vorrichtung betätigt, vgl. Figur 3, 7 und 12.

Zum Lösen der Klemmung schiebt die betätigte Antriebsvorrichtung den Schlitten (90) in Antriebsrichtung (4) so weit nach vorn, dass der Führungszapfen (56) gegen eine Ablenkflanke (68) stößt, um unter einem Winkel von z.B. 19 Winkelgraden nach links in die zweite Kurzzeithaltelage (66) geschoben zu werden.

Der Mittelpunkt der zweiten Kurzzeithaltelage (66) liegt - gemessen in Führungslängsrichtung - z.B. 0,7 mm hinter dem Mittelpunkt der zweiten Langzeithaltelage (64). Bei einem Nachlassen der Antriebskraft der Antriebsvorrichtung schieben die Federelemente (98) den Schlitten (90) wieder nach hinten, wodurch der Führungszapfen (56) aus der Kurzzeithaltelage (66) - abgelenkt durch die Innenflanke des Kulissenkanals (60) zwangsweise links von der Mittellinie (29) in den Lösekanal (62) gelangt. Der Führungszapfen (56) gleitet in die erste Langzeithaltelage (63) zurück.

Beim Lösevorgang führt der Schlitten (90) eine Hubbewegung aus, vgl. Figur 13, obwohl die Reibgehemme (121, 131) fest an der Führungsschiene (7) anliegen. Der Antriebskeil (101) kann sich somit nicht in Einkeilrichtung (89) verschieben. Folglich hebt der Boden (96) des Schlittens (90) während des zwischen der zweiten Langzeithaltelage (64) und der zweiten Kurzzeithaltelage (66) gelegenen Hubs gegen die Wirkung der Federelemente (99) vom Teller (108) ab.

In Figur 15 wird ein alternativer Kulissenkanal (60) gezeigt. Der Kulissenkanal ist auf der Abflachung (92) so ausgerichtet, dass die Langzeithaltepunkte (63) und (64) sowie die Schwenkachse (52) des Schwenkbolzens (54) in der Ebene liegen, in der auch die Mittellinie (29) angeordnet ist. Zudem sind der Spannkanal (61) und der Lösekanal (62) jeweils in der Ebene der Abflachung (92) s-förmig gekrümmt. Diese Krümmung ermöglicht es dem Führungszapfen (56), aus der ersten Langzeithaltelage (63) auf einem stetigen Rastbahnabschnitt ruckfrei in den Spannkanal (61) einzufädeln. Vergleichbares gilt für den Führungszapfen (56) beim Einspuren in den Lösekanal (62) aus der zweiten Kurzzeithaltelage (66) heraus.

Bei beiden in den Figuren 14 und 15 gezeigten Varianten schwenkt bei einem kompletten Kulissendurchlauf die Rastschwinge (51) zunächst im Gegenuhrzeigersinn. Hierbei gleitet der Führungszapfen (56) an der Innenflanke des Spannkanals (61) entlang. Sobald er dort von der Innenflanke zur Außenflanke wechselt, schwingt die Rastschwinge (51) im Uhrzeigersinn zurück, bis der Führungszapfen (56) im Lösekanal (62) die Anlage an der Innenflanke mit der Anlage an der Außenflanke tauscht. Auf diese Weise überdeckt die Rastschwinge (51) einen Pendelbereich von ca. 36 bis 40 Winkelgraden.

Die für das Lösen erforderliche Vorschubbewegung der Antriebsvorrichtung hat einen kürzeren Hub als die für das Klemmen notwendige Vorschubbewegung.

Selbstverständlich können die einzelnen Schiebekeilgetriebe auch schräg oder quer gegenüber der Führungslängsrichtung angeordnet sein.

### Bezugszeichenliste:

- 1: Maschinenschlitten
- 2: Führungslängsrichtung, Maschinenschlittenbewegung
- 3: Klemmrichtung, quer zu (2)
- 4: Antriebsrichtung, parallel zu (2); Wirkrichtung größere Komponente von (89)
- 5: Maschinenbett
- 6: vertikale Mittenlängsebene
- 7: Schiene, Führungsschiene
- 8, 9: Nebenflächen

- 10: Grundkörper, c- bzw. u-förmig; Gehäuse
- 11: Gehäusezone, rechts
- 12: Gehäusezone, links
- 13: Flanschzone
- 15: Oberseite
- 16: Ausnehmung, rechteckig, Vertiefung
- 17: Ausnehmung, dreieckig
- 18: Zapfen
- 19: Nut, zentral

- 21: Stufenbohrungen
- 22: Zylinderflächenbohrung
- 23: Federtopf,
- 24: Durchbruchsbohrung
- 25: Gewindebohrung
- 26: Feingewinde
- 27: Federführungsbohrung
- 28: Gewindestift
- 29: Mittellinie

- 31: Gehemmebohrungen
- 32: Hauptbohrungen
- 33: Druckstückführungsbohrungen, Führungen
- 34: Austrittsbohrungen
- 35: Käfiglagerausnehmung, oval
- 36: Verdrehsicherungsbohrung
- 37: Deckel, rechteckig
- 38: Gewindestift
- 39: Mittellinien

- 40: Vorrichtungsträger
- 41: Durchgangsbohrung
- 42: Zylindersenkung, groß
- 43: Zylindersenkung, klein
- 44: Gewindebohrungen
- 46: Ausnehmung
- 47: Scheibe
- 48: Senkschraube
- 49: Elastomerkörper, ringförmig

- 50: Rastmechanik; Formrichtgesperre, bistabil
- 51: Koppelelement, Rastschwinge
- 52: Schwenkachse
- 53: Schwenkbohrung
- 54: Schwenkbolzen
- 55: Zapfenbohrung
- 56: Führungszapfen
- 57: Mittellinie von (56)
- 58: Kugeldruckstück
- 59: Kerbe in (60)

- 60: Kulissenkanal
- 61: Spannkanal
- 62: Lösekanal
- 63: Langzeithaltelage, vorn
- 64: Langzeithaltelage, hinten
- 65: Kurzzeithaltelage im Spannkanal
- 66: Kurzzeithaltelage im Lösekanal
- 67: Fangflanke, Teil der Innenflanke
- 68: Ablenkflanke, Teil der Außenflanke
- 69: Rastbahn

- 70: erstes Schiebekeilgetriebe, Gleitschiebekeilgetriebe
- 71: Folgekeil, Schiebekeil
- 72: Keilfläche, rechts
- 73: Keilfläche, links; Rückseite
- 74: Folgekeilstirnfläche

- 77: Führungsstange
- 78: Federelement, Schraubendruckfeder
- 79: Klemmkugel

- 81: Schrägdruckstück, Klemm- oder Greifelement
- 82: Keilfläche
- 83: Rückhubring, Elastomerkörper
- 85: Stützelement, Einschraubdeckel
- 86: Keilfläche
- 89: Einkeilrichtung

- 90: Schlitten
- 91: Außenkontur, zylindrisch
- 92: Abflachung
- 93: Durchbruchsabschnitt, Stufenbohrung, zentral
- 94: Führungsabschnitt, Stufenbohrung
- 95: Deckellagerabschnitt, Stufenbohrung
- 96: Boden, innen
- 97: Verdrehsicherungszapfen
- 98: Federelement, Federsystem; Schraubendruckfedern, außen
- 99: Federelement, Federsystem; Schraubendruckfedern, innen
- 100: zweites Schiebekeilgetriebe, ggf. Wälzschiebekeilgetriebe
- 101: Antriebskeil, Schiebekeil
- 102: Keilfläche, Planfläche, rechts
- 103: Keilfläche, Planfläche, links
- 104: Anschlag, vorn
- 105: Anschlag, hinten; Keilrückseite
- 106: Schubstange, Antriebselement
- 107: Schraube
- 108: Teller
- 109: Schraube

- 110: Käfig
- 111: Anschlag, vorn
- 112: Anschlag, hinten; Boden von (116)
- 113: Führungsstege für (71)
- 115: Durchgangskanal
- 116: Schiebekeilausnehmung
- 117: Querbohrung
- 119: Zylinderrollen

- 121: Reibgehemme, rechts
- 122: Reibbacke
- 131: Reibgehemme, links
- 132: Reibbacke

- 151: Koppelelement, Querschieber
- 152: Quernut in (10)

## Patentansprüche

1. Vorrichtung in der ein beweglich gelagertes Abtriebselement (106) zwei Endlagen aufweist, wobei zwischen dem Abtriebselement (106) und dessen Antriebsvorrichtung eine Rastmechanik (50) angeordnet ist, über die das Abtriebselement (106) bei einem ersten Antriebsimpuls durch eine Hub- oder Schwenkbewegung gegen eine Rückstellkraft aus der ersten in die zweite Endlage bringbar ist und über die bei einem zweiten Antriebsimpuls das Abtriebselement (106) aus der zweiten in die erste Endlage durch die Rückstellkraft überführbar ist, **dadurch gekennzeichnet,**
- **dass** die in einem Gehäuse (10) angeordnete Rastmechanik (50) einen von der Antriebsvorrichtung betätigbaren Schlitten (90) aufweist, der sich in Wirkrichtung (4) des Abtriebselement (106) am Gehäuse (10) mittels eines Federelementes oder eines Federsystems (98) abstützt,
- **dass** im oder am Schlitten (90) das Abtriebselement (106) verschieb- oder verschwenkbar gelagert ist,
- **dass** sich das Abtriebselement (106), in seiner Wirkrichtung (4) federbelastet, am Schlitten (90) abstützt,
- **dass** der Schlitten (90) mit dem Gehäuse (10) über eine zur Rastmechanik (50) gehörendes Koppelelement (51, 151) gekoppelt ist,
- **dass** entweder das Koppelelement (51, 151) am Gehäuse (10) gelagert und am oder im Schlitten (90) entlang einer Rastbahn (69) geführt ist
oder das Koppelelement (51, 151) am Schlitten (90) gelagert und am Gehäuse (10) entlang einer Rastbahn (69) geführt ist.

2. Vorrichtung gemäß Anspruch 1, **dadurch gekennzeichnet, dass** das Abtriebselement (106) im Schlitten (90) mittels eines Tellers (108) geführt ist, wobei bei unbetätigter Vorrichtung der Teller (108) durch ein Federelement oder ein Federsystem (99) in Wirkrichtung (4) am Schlitten (90) anliegt.

3. Vorrichtung gemäß Anspruch 2, **dadurch gekennzeichnet, dass** das den Teller (108) belastende Federelement oder Federsystem (99) in der Summe eine größere Federrate aufweist als ein Federelement oder Federsystem (98), das den Schlitten (90) entgegen der Wirkrichtung (4) am Gehäuse (10) abstützt.

4. Vorrichtung gemäß Anspruch 1, **dadurch gekennzeichnet, dass** das Federsystem (98) und/oder (99) aus ineinander geschachtelten oder nebeneinander angeordneten Schraubendruck- oder Zugfedern, aus gleich- oder gegensinnig gestapelten Tellerfedern, einer Gasdruckfeder, einer Elastomerfeder oder einer Kombination der vorgenannten Federelemente besteht.

5. Vorrichtung gemäß Anspruch 1, **dadurch gekennzeichnet, dass** die Rastbahn (69) an der Außenkontur (91) des Schlittens (90) angeordnet ist.

6. Vorrichtung gemäß Anspruch 1, **dadurch gekennzeichnet, dass** die Rastbahn (69) als Kulissenkanal (60) in einer Abflachung (92) der Außenkontur (91) des Schlittens (90) eingearbeitet ist, in die ein an dem Koppelelement (51, 151) angeordneter Führungszapfen (56) hineinragt.

7. Vorrichtung gemäß Anspruch 1, **dadurch gekennzeichnet, dass** die Rastbahn (69) einen geschlossenen Kurvenzug darstellt, der zwei Langzeithaltelagen (63, 64) und zwei Kurzzeithaltelagen (65, 66) aufweist.

8. Vorrichtung gemäß Anspruch 7, **dadurch gekennzeichnet, dass** die Langzeithaltelagen (63, 64) auf der Rastbahn (69) die Stellen angeben, an dem das Koppelelement (51, 151) mit dem Führungszapfen (56) den Schlitten (90) in einer vorderen und einer hinteren Ruhelage halten.

9. Vorrichtung gemäß Anspruch 1, **dadurch gekennzeichnet, dass** der Schlitten (90) in seiner vorderen Ruhelage - das Antriebselement hat seine Antriebsaufgabe erfüllt - in Wirkrichtung (4) bis zum Führungsende einen Resthub aufweist, der mindestens dem Abstand entspricht, der - gemessen in Wirkrichtung (4) - zwischen den Mittelpunkten der hinteren Langzeithaltelage (64) und der zweiten Kurzzeithaltelage (66) liegt.

10. Vorrichtung gemäß Anspruch 1, **dadurch gekennzeichnet, dass** der Schlitten (90) verdrehsicher im Gehäuse (10) geführt ist.

## Claims

1. An assembly in which a movably mounted driven element (106) has two end positions, comprising a detent-action mechanism (50) situated between the driven element (106) and its drive means via which mechanism the driven element (106) is movable against a bias from the first into its second end position by a lifting or pivoting movement in response to a first drive pulse and via which mechanism the driven element (106) is movable from the second to its first end position by said bias in response to a second drive pulse, **characterized by**
- the detent-action mechanism (50) being situated in a housing (10) and comprising a carriage (90) actuatable by said drive means and supported in the direction of effect (4) of the driven element (106) against the housing (10) via a spring element or a spring system (98),
- the driven element (106) being mounted in or on said carriage for shifting or pivoting movement,
- the driven element (106) engaging the carriage (90) under spring bias acting in said direction of effect,
- the carriage (90) being coupled with the housing (10) via a coupling element (51, 151), said coupling element being part of the detent-action mechanism (50), and
- the coupling element (51, 151) being mounted on housing (10) or being guided on or in the carriage (90) along a detent-action track (69)
or the coupling element (51, 151) being mounted on the carriage (90) and guided on the housing (10) along a detent-action track (69).

2. Assembly as claimed in claim 1, **characterized by** the driven element (106) being guided in the carriage (90) by means a disk element (108), with the disk element (108) urged towards the carriage (90) in said direction of effect (4) by means of a spring element or a spring system when the assembly is in its unactuated condition.

3. Assembly as claimed in claim 2, **characterized by** the spring element or spring system (99) having a spring rate greater in its sum-total than a spring element or a spring system (98) urging the carriage (90) onto the housing (10) against the direction of effect (4).

4. Assembly as claimed in claim 1, **characterized by** the spring system (98) and/or (99) comprising nested coiled pressure or draw springs placed side by side, Belleville washers stacked in the same or opposite directions, a gas pressure spring, an elastomer spring or a combination of the aforesaid spring elements.

5. Assembly as claimed in claim 1, **characterized by** the detent-action track (69) being situated on the outer contour (91) of the carriage (90).

6. Assembly as claimed in claim 1, **characterized by** the detent-action track (69) being configured as a slide channel (60) provided in a flat portion (92) of the outer contour (91) of the carriage (90), with a guide tab (56) on the coupling element (51, 151) extending into said channel.

7. Assembly as claimed in claim 1, **characterized by** the detent-action track (69) configured to form a closed curve having two long-term hold positions (63, 64) and two short-term hold positions (65, 66).

8. Assembly as claimed in claim 7, **characterized by** the long-term hold positions (63, 64) identifying the positions along the detent-action track (69) in which the coupling element (51, 151) holds the carriage (90) in a forward and a rearward rest position by means of the guide tab (56).

9. Assembly as claimed in claim 1, **characterized by** the carriage (90) having in its forward rest position - the driving element having performed its task of driving - a residual stroke to the end of guidance in the direction of effect (4) which corresponds at least to the distance between the centres of the rearward long-term hold position (64) and the second short-term hold position (66), measured in the direction of effect (4).

10. Assembly as claimed in claim 1, **characterized by** the carriage (90) being secured against rotation in housing (10) when moving.

## Revendications

1. Dispositif dans lequel un élément de sortie (106) monté de manière mobile présente deux positions extrêmes, dans lequel, entre l'élément de sortie (106) et son dispositif d'entraînement, est disposé un mécanisme d'encliquetage (50) au moyen duquel, lors d'une première impulsion d'entraînement, l'élément de sortie (106) peut être déplacé de la première position extrême à la deuxième position extrême par un mouvement de levage ou de pivotement à l'encontre d'une force de rappel, et au moyen duquel, lors d'une deuxième impulsion d'entraînement, l'élément de sortie (106) peut être transféré de la deuxième position extrême à la première position extrême par la force de rappel, **caractérisé en ce**
- **que** le mécanisme d'encliquetage (50) disposé dans un boîtier (10) présente un chariot (90) qui peut être actionné par le dispositif d'entraînement et qui est en appui sur le boîtier (10) dans la direction d'action (4) de l'élément de sortie (106) au moyen d'un élément ou d'un système à ressort (98),
- **que** l'élément de sortie (106) est disposé de manière coulissante ou pivotante dans ou sur le chariot (90),
- **que** l'élément de sortie (106), sous la contrainte d'un ressort dans sa direction d'action (4), est en appui sur le chariot (90),
- **que** le chariot (90) est couplé au boîtier (10) au moyen d'un élément de couplage (51, 151) faisant partie du mécanisme d'encliquetage (50),
- **que** l'élément de couplage (51, 151) est monté sur le chariot (90) et guidé sur ou dans le boîtier (10) le long d'une glissière d'enclenchement (69) ou que l'élément de couplage (51, 151) et monté sur le chariot (90) et guidé sur le boîtier (10) le long d'une glissière d'enclenchement (69).

2. Dispositif selon la revendication 1, **caractérisé en ce que** l'élément de sortie (106) est guidé dans le chariot (90) au moyen d'un plateau (108), ledit plateau (108), lorsque le dispositif n'est pas activé, étant en appui sur le chariot (90) dans la direction d'action (4) au moyen d'un élément ou d'un système à ressort (99).

3. Dispositif selon la revendication 2, **caractérisé en ce que** l'élément ou le système à ressort (99) qui sollicite le plateau (108) présente au total une raideur plus grande qu'un élément ou système à ressort (98) qui soutient le chariot (90) sur le boîtier (10) dans la direction opposée à la direction d'action (4).

4. Dispositif selon la revendication 1, **caractérisé en ce que** le système à ressort (98) et/ou le système à ressort (99) sont composés de ressorts hélicoïdaux de compression ou de traction emboîtés l'un dans l'autre ou disposés côte à côte, de rondelles ressorts empilées dans le même sens ou dans un sens opposé, d'un ressort à pression de gaz, d'un ressort en élastomère ou d'une combinaison des éléments à ressort mentionnés ci-devant.

5. Dispositif selon la revendication 1, **caractérisé en ce que** la glissière d'enclenchement (69) est agencée sur le contour extérieur (91) du chariot (90).

6. Dispositif selon la revendication 1, **caractérisé en ce que** la glissière d'enclenchement (69) est intégrée comme canal à coulisse (60) dans un aplatissement (92) du contour extérieur (91) du chariot (90) dans lequel un tourillon de guidage (56) disposé sur l'élément de couplage (51, 151) est engagé.

7. Dispositif selon la revendication 1, **caractérisé en ce que** la glissière d'enclenchement (69) constitue une boucle fermée qui présente deux positions de retenue longue durée (63, 64) et deux positions de retenue courte durée (65, 66) .

8. Dispositif selon la revendication 7, **caractérisé en ce que** les positions de retenue longue durée (63, 64) déterminent les positions sur la glissière d'enclenchement (69) où l'élément de couplage (51, 151) et le tourillon de guidage (56) maintiennent le chariot (90) dans une position de repos avant et dans une position de repos arrière.

9. Dispositif selon la revendication 1, **caractérisé en ce que** le chariot (90) dans sa position de repos avant, l'élément d'entraînement ayant rempli sa fonction d'entraînement, présente, dans sa direction d'action (4) jusqu'à l'extrémité de guidage, une course résiduelle qui correspond au moins à la distance qui, mesurée dans la direction d'action, se situe entre le point central de la position de retenue arrière longue durée (64) et le point central de la deuxième position de retenue courte durée (66) .

10. Dispositif selon la revendication 1, **caractérisé en ce que** le chariot (90) est guidé dans le boîtier (10) sans possibilité de rotation.
